# EUROPÄISCHE PATENTSCHRIFT

(11) **EP 3 331 740 B1**
(45) Veröffentlichungstag und Bekanntmachung des Hinweises auf die Patenterteilung: **09.10.2019**
(21) Anmeldenummer: 16751255.7
(22) Anmeldetag: 04.08.2016
(51) Int. Cl.: B60W 50/04, B60W 50/00

(54) **VERFAHREN ZUM BETREIBEN EINER STEUERVORRICHTUNG UND DIAGNOSESYSTEM**
METHOD FOR OPERATING A CONTROL DEVICE AND DIAGNOSIS SYSTEM
PROCÉDÉ DE FONCTIONNEMENT D'UN DISPOSITIF DE COMMANDE ET SYSTÈME DE DIAGNOSTIC

(30) Priorität: 06.08.2015 DE 102015215061
(43) Veröffentlichungstag der Anmeldung: 13.06.2018
(73) Patentinhaber: Continental Automotive GmbH, 30165 Hannover (DE)
(72) Erfinder: BREITFELDER, Markus, 93047 Regensburg (DE); EDER, Simon Tobias, 74632 Neuenstein (DE)
(86) Internationale Anmeldenummer: PCT/EP2016/068686
(87) Internationale Veröffentlichungsnummer: WO 2017/021507

(56) Entgegenhaltungen:
- DE-A1-102008 004 205
- DE-A1-102009 028 871
- DE-A1-102013 021 231
- US-A- 5 794 165

## Beschreibung

Die Erfindung betrifft ein Verfahren zum Betreiben einer Steuervorrichtung für ein Fahrzeug, wobei die Steuervorrichtung als Mehrkernprozessor mit wenigstens zwei Kernen zur parallelen Abarbeitung von Rechenprozessen ausgebildet ist und eine Kommunikationsschnittstelle umfasst, über welche sie signaltechnisch koppelbar mit einer Diagnoseeinheit ist, bei dem die Rechenprozesse jeweils einer vorgegebenen Systemzykluszeitdauer der Steuervorrichtung zugeordnet werden, wenn alle Rechenprozesse, die derselben vorgegebenen Systemzykluszeitdauer zugeordnet sind, abgeschlossen sind, dann wird ein Ausgangssignal über die Kommunikationsschnittstelle der Steuervorrichtung bereitgestellt, umfassend zumindest eines von Eingangs-, Ausgangs-, oder Zwischenwerten der Rechenprozesse. Die Erfindung betrifft ferner ein Diagnosesystem.

Ein solches Verfahren ist aus der DE 10 2013 021 231 A1 und aus der DE 10 2008 004 205 A1 bekannt.

Die DE 10 2009 028 871 A1 offenbart ferner ein Verfahren zum Überprüfen zumindest eines Speichers, insbesondere eines Funktionsüberwachungsspeichers eines Funktionsüberprüfungssystems, mit Ausführen einer Speicherüberprüfungsroutine, bei der der zumindest eine Speicher n-mal überprüft wird, wobei n eine vorbestimmbare Anzahl von Überprüfungen ist, und erneutem Ausführen der Speicherüberprüfungsroutine nach Ablauf eines vorbestimmten Zeitintervalls.

Die Aufgabe, die der Erfindung zugrunde liegt, ist es, ein Verfahren zum Betreiben einer Steuervorrichtung für ein Fahrzeug sowie ein korrespondierendes Diagnosesystem zu schaffen, das eine zuverlässige und effiziente Funktionsvalidierung der Steuervorrichtung ermöglicht.

Die Aufgabe wird gelöst durch die unabhängigen Patentansprüche. Vorteilhafte Ausgestaltungen sind in den Unteransprüchen gekennzeichnet.

Gemäß einem ersten Aspekt betrifft die Erfindung ein Verfahren zum Betreiben einer Steuervorrichtung für ein Fahrzeug. Die Steuervorrichtung ist als Mehrkernprozessor mit wenigstens zwei Kernen zur parallelen Abarbeitung von Rechenprozessen ausgebildet. Die Steuervorrichtung umfasst eine Kommunikationsschnittstelle, über welche sie signaltechnisch koppelbar ist mit einer Diagnoseeinheit.

Bei dem Verfahren werden die Rechenprozesse jeweils einer vorgegebenen Systemzykluszeitdauer der Steuervorrichtung zugeordnet. Wenn alle Rechenprozesse, die derselben vorgegebenen Systemzykluszeitdauer zugeordnet sind, abgeschlossen sind, dann wird ein Ausgangssignal über die Kommunikationsschnittstelle der Steuervorrichtung bereitgestellt. Das Ausgangssignal umfasst zumindest eines von Eingangs-, Ausgangs-, oder Zwischenwerten der Rechenprozesse.

Es wird außerdem ein Auswahlsignal bereitgestellt, das repräsentativ ist für die dem Ausgangssignal zuzuordnenden Eingangs- und/oder Ausgangs und/oder Zwischenwerte. Der jeweilige Eingangs- und/oder Ausgangs- und/oder Zwischenwert der Rechenprozesse wird abhängig von dem Auswahlsignal dem Ausgangssignal zugeordnet.

In vorteilhafter Weise ermöglicht dies ein Bereitstellen des Ausgangssignals, ohne eine Architektur der Steuervorrichtung wie zum Beispiel die Anzahl der Kerne der Steuervorrichtung widerzuspiegeln. Ferner kann verhindert werden, dass das bereitgestellte Ausgangssignal eine Verteilung der Berechnungsvorgänge der Steuervorrichtung auf die Kerne widerspiegelt.

Beispielsweise kann eine Abfolge der Berechnungsvorgänge einer Systemzykluszeitdauer, verteilt auf mehrere Kerne, sich abhängig von einem Systembetriebszustand ändern. Durch Bereitstellen des Ausgangssignals, nachdem alle Rechenprozesse derselben Systemzykluszeitdauer abgeschlossen sind, wird zu einer zeitlichen Kohärenz der bereitgestellten Daten beigetragen.

Der Steuervorrichtung kann bzw. können eine einzige vorgegebene Systemzykluszeitdauer oder mehrere verschiedene vorgegebene Systemzykluszeitdauern zugeordnet sein. Beispielsweise kann die jeweilige Systemzykluszeitdauer zwischen 10ms und 100ms betragen. Eine Zuordnung der Rechenprozesse zu einer jeweiligen Systemzykluszeitdauer erfolgt insbesondere eindeutig, das heißt, einer jeweiligen Systemzykluszeitdauer können mehrere Rechenprozesse zugeordnet sein, ein Rechenprozess ist jedoch jeweils lediglich einer jeweiligen Systemzykluszeitdauer zugeordnet. Bei der Systemzykluszeitdauer handelt es sich um eine zyklische Zeitspanne. Beispielsweise korrespondiert die Systemzykluszeitdauer zu einem Systemtakt der Steuervorrichtung.

In einer vorteilhaften Ausgestaltung gemäß dem ersten Aspekt wird den Rechenprozessen jeweils eine Maximallaufzeitdauer zugeordnet. Die Rechenprozesse werden jeweils abhängig von ihrer Maximallaufzeitdauer der jeweiligen vorgegebenen Systemzykluszeitdauer der Steuervorrichtung zugeordnet.

In vorteilhafter Weise kann so sichergestellt werden, dass der jeweilige Rechenprozess nach der Maximallaufzeitdauer abgearbeitet wurde.

In vorteilhafter Weise kann der jeweilige Rechenprozess so besonders zuverlässig einer Systemzykluszeitdauer zugeordnet werden. Die Rechenprozesse umfassen beispielsweise jeweils wenigstens eine ausführbare Funktion (engl. "Runable"). Beispielsweise ist den ausführbaren Funktionen jeweils eine vorgegebene Maximallaufzeitdauer zugeordnet, die in einem Speicher der Steuervorrichtung hinterlegt ist. Abhängig von der vorgegebenen Maximallaufzeitdauer der ausführbaren Funktionen eines jeweiligen Rechenprozesses kann auf die Maximallaufzeitdauer des Rechenprozesses geschlossen werden. Alternativ oder zusätzlich kann dem jeweiligen Rechenprozess eine vorgegebene Maximallaufzeitdauer zugeordnet sein, die in dem Speicher hinterlegt ist. Die Maximallaufzeitdauer des jeweiligen Rechenprozesses ist insbesondere kleiner gleich der Systemzykluszeitdauer, der der jeweilige Rechenprozess zugeordnet wird. Eine Laufzeitdauer des jeweiligen Rechenprozesses ist beispielsweise abhängig von einem Systembetriebszustand der Steuervorrichtung.

In vorteilhafter Weise kann so zu einer geringen benötigten Kommunikationsbandbreite bei Bereitstellen des Ausgangsignals beigetragen werden. Dabei muss das Ausgangssignal insbesondere keine Information umfassen, auf welchem Kern die bereitzustellenden Eingangs-, Ausgangs- oder Zwischenwerte berechnet werden. In vorteilhafter Weise kann so zu einer geringen Komplexität bei Auswahl des bereitzustellenden Eingangs-, Ausgangs- oder Zwischenwerts durch die Diagnoseeinheit beigetragen werden.

Beispielsweise kann das Auswahlsignal zu einer Laufzeit eines Programms zur Durchführung des Verfahrens bereitgestellt werden. Die Steuervorrichtung ist hierzu signaltechnisch mit der Diagnoseeinheit gekoppelt, über die ein Anwender eine auszugebende Variable, also den bereitzustellenden Eingangs-, Ausgangs- oder Zwischenwert festlegt. Beispielsweise kann der Anwender in diesem Zusammenhang ferner die Systemzustandszeitdauer festlegen, in der eine Betrachtung der jeweiligen Variablen erfolgt. Alternativ kann von der Diagnoseeinheit auf geeignete, automatisierte Art und Weise die Systemzustandszeitdauer, in der die Betrachtung der jeweiligen Variable erfolgen soll, bereitgestellt werden. Abhängig von der durch den Anwender festgelegten Systemzustandszeitdauer und der auszugebenden Variable wird jeweils ein bereitzustellender Ausgangssignalanteil des Ausgangssignals ermittelt. Der Ausgangssignalanteil kann auch als "Kanal" oder "Diagnosekanal" bezeichnet werden.

In einer weiteren vorteilhaften Ausgestaltung gemäß dem ersten Aspekt wird ein Startsignal ermittelt, wenn alle Rechenprozesse, die derselben vorgegebenen Systemzykluszeitdauer zugeordnet sind, abgeschlossen sind. Abhängig von dem Startsignal wird die Zuordnung des jeweiligen Eingangs- und/oder Ausgangs- und/oder Zwischenwerts der Rechenprozesse durchgeführt.

In vorteilhafter Weise ermöglicht dies eine Zuordnung des jeweiligen Eingangs-, Ausgangs- oder Zwischenwerts der Rechenprozesse beziehungsweise ein Kopieren der bereitzustellenden Eingangs-, Ausgangs- oder Zwischenwerte zur Übertragung zu einem Zeitpunkt, der in Bezug auf das Gesamtsystem ermittelt wird, und insbesondere nicht lediglich von einer Berechnung auf einem Kern abhängt. Insbesondere wird die Zuordnung auf einem dafür vorgesehenen Kanal nur unter zusätzlichen Bedingungen gestartet. Als beispielhafte Bedingungen sind zu nennen: Auslösen eines Startsignales wenn
- Alle Rechenprozesse einer Systemzykluszeitdauer beendet wurden,
- Alle Rechenprozesse einer Systemzykluszeitdauer gestartet wurden,
- Ein bestimmtes Einzelereignis im System erkannt wurde, wie zum Beispiel ein Fehlereignis.

Beispielsweise wird im Falle, dass diese zusätzlichen Bedingungen erfüllt sind, das Startsignal bereitgestellt. Das Ermitteln des Startsignals umfasst in diesem Fall eine Überprüfung, ob das Startsignal vorliegt. Anschließend wird abhängig von dem Startsignal die Zuordnung des jeweiligen Eingangs- und/oder Ausgangs- und/oder Zwischenwerts der Rechenprozesse durchgeführt.

In einer weiteren vorteilhaften Ausgestaltung gemäß dem ersten Aspekt wird ein Startsignal abhängig von einem Sensorsignal und/oder einem Systemereignis ermittelt.

In vorteilhafter Weise kann so zu einer geringen benötigten Kommunikationsbandbreite bei Bereitstellen des Ausgangssignals beigetragen werden. Insbesondere erfolgt ein Start der Zuordnung auf einem dafür vorgesehenen Kanal nur im Falle spezieller Ereignisse innerhalb des Systems. Beispielhaft handelt es sich bei dem Ereignis um ein vorgegebenes Systemereignis oder ein Über-/Unterschreiten eines vorgegebenen Schwellenwerts durch ein Sensorsignal.

In einer weiteren vorteilhaften Ausgestaltung gemäß dem ersten Aspekt wird das Startsignal abhängig von einem Systembetriebszustand ermittelt.

In vorteilhafter Weise kann die Zuordnung des jeweiligen Eingangs- und/oder Ausgangs- und/oder Zwischenwerts der Rechenprozesse abhängig von einem vom Systembetriebszustand abhängigen Systemereignis gestartet werden.

In einer weiteren vorteilhaften Ausgestaltung gemäß dem ersten Aspekt wird abhängig von einem Sensorsignal und/oder einem Systemereignis und/oder einem Systembetriebszustand ein Stellvertretersignal ermittelt. Das Startsignal wird abhängig von dem Stellvertretersignal ermittelt.

In vorteilhafter Weise kann so im Falle, dass ein Start der Zuordnung des jeweiligen Eingangs- und/oder Ausgangs- und/oder Zwischenwerts der Rechenprozesse abhängig von einem vom Systembetriebszustand abhängigen Systemereignis erfolgt, weiterhin eine Zuordnung erfolgen, auch wenn das eigentliche Systemereignis ausbleibt. Beispielsweise ermittelt in diesem Zusammenhang ein Startalgorithmus, ob das ursprüngliche Startsignal verfügbar ist oder nicht. Ein Beispiel für einen derartigen Startalgorithmus ist anhand verfügbarer Systembetriebsinformationen zu ermitteln, ob das ursprüngliche Startsignal zur Verfügung steht oder nicht. Als Beispiel wäre hier zu nennen, dass eine Motordrehzahl als Systembetriebsinformation Null ist, wenn ein Kurbelwellensignal, welches das ursprüngliche Startsignal darstellt, ausbleibt.

Gemäß einem zweiten Aspekt zeichnet sich die Erfindung aus durch ein Diagnosesystem. Das Diagnosesystem umfasst eine Steuervorrichtung, welche als Mehrkernprozessor mit wenigstens zwei Kernen zur parallelen Abarbeitung von Rechenprozessen ausgebildet ist und welche eine Kommunikationsschnittstelle aufweist. Das Diagnosesystem umfasst ferner eine Diagnoseeinheit, die mit der Kommunikationsschnittstelle signaltechnisch gekoppelt ist.

Die Diagnoseeinheit ist ausgebildet, der Steuervorrichtung ein Auswahlsignal bereitzustellen, das repräsentativ ist für einem Ausgangssignal zuzuordnende Eingangs- und/oder Ausgangs und/oder Zwischenwerte von durch die Steuervorrichtung abzuarbeitenden Rechenprozessen. Die Diagnoseeinheit ist ferner ausgebildet, ein jeweiliges durch die Steuervorrichtung bereitgestelltes Ausgabesignal auszugeben.

In vorteilhafter Weise ermöglicht dies eine einfache Funktionsvalidierung der Steuervorrichtung.

In einer vorteilhaften Ausgestaltung gemäß dem zweiten Aspekt ist die Steuervorrichtung ausgebildet, ein Verfahren gemäß dem ersten Aspekt durchzuführen.

Ausführungsbeispiele sind im Folgenden anhand der schematischen Zeichnungen näher erläutert.

Es zeigen:
- Figur 1: ein schematisch dargestelltes Diagnosesystem,
- Figur 2: eine Ablaufsequenz bei einem Betreiben einer Steuervorrichtung gemäß Figur 1, und
- Figur 3: ein Ablaufdiagramm zum Betreiben der Steuervorrichtung gemäß Figur 1.

Elemente gleicher Konstruktion oder Funktion sind figurenübergreifend mit den gleichen Bezugszeichen versehen.

In einem System werden in einer Prozesskette Daten einer zu steuernden Vorrichtung, z.B. eines Benzinmotors, über Sensoren erfasst. Beispielhaft wird hierbei eine Kühlwassertemperatur erfasst. Darauffolgend findet auf Basis dieser Daten und eventueller weiterer Eingangsinformationen eine Berechnung von Ausgangsgrößen für Aktuatoren des Systems statt, wie zum Beispiel zur Steuerung einer Kraftstoffeinspritzmenge.

Diese Berechnung erfolgt entweder zyklisch mit zu dem System passenden Systemzykluszeitdauern, beispielsweise alle 10ms, und/oder ereignisgesteuert auf Basis externer Ereignisse wie einer Kurbelwellenposition oder auf Basis interner Ereignisse, wie das Erkennen eines Fehlers im System. In diesem Falle hängt die Häufigkeit eines Eintretens des Ereignisses von einer das Ereignis auslösenden Quelle ab. Beispielhaft sei hier ein Drehzahlsensor einer Kurbelwelle und einer damit einhergehenden Winkelgeschwindigkeit genannt.

Prozesse dieser Prozesskette werden mittels Software in Rechenprozesse (sogenannte "Tasks") eines Betriebssystems auf einer Steuervorrichtung wie einem Mikrokontroller gerechnet. Um eine Funktionsvalidierung und/oder Optimierung des Systems durchführen zu können, werden Systemeingangsgrößen wie Sensorwerte und/oder Systemausgangsgrößen wie eine Sollwertvorgabe für Aktuatoren, sowie berechnete Werte, die innerhalb der Prozesskette ermittelt werden, als Diagnosedaten auf dem Mikrokontroller erfasst und mittels geeigneter Kommunikationsprotokolle an eine Diagnoseeinheit (z.B. INCA) übertragen.

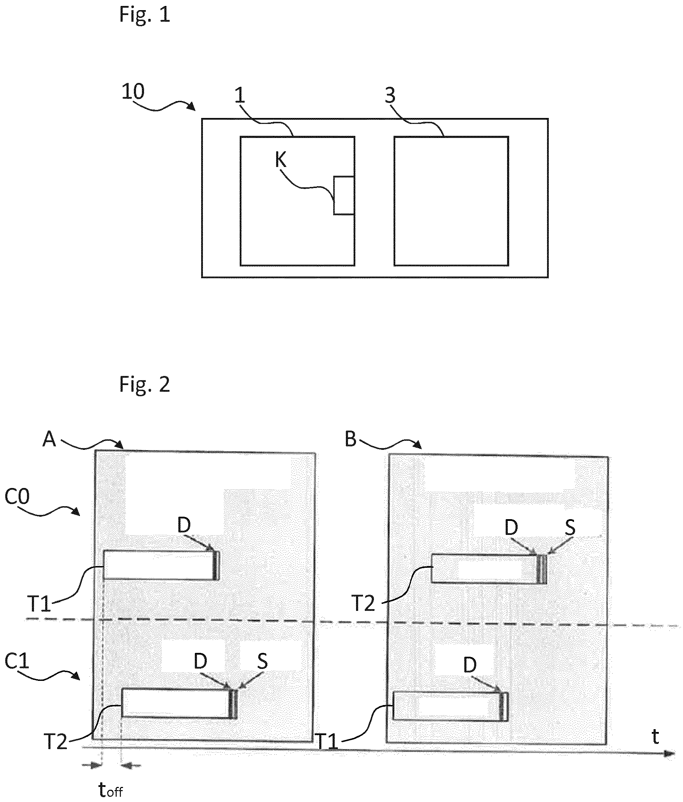

Figur 1 zeigt ein Diagnosesystem 10 für eine Steuervorrichtung 1 für ein Fahrzeug, umfassend eine Diagnoseeinheit 3, welche signaltechnisch mit einer Kommunikationsschnittstelle K der Steuervorrichtung 1 gekoppelt ist. Die Steuervorrichtung 1 ist beispielsweise einem vorgenannten System (nicht näher dargestellt) zugeordnet und dient beispielhaft der Steuerung eines Benzinmotors.

Mittels einer solchen Diagnoseeinheit 3 und optional weiteren Diagnosemitteln kann ein Verhalten des Systems zeitlich kohärent abgebildet werden. Ziel dabei ist beispielsweise zu überprüfen, ob eine Änderung einer Systemeingangsgröße zum gewünschten Verhalten an der entsprechenden Systemausgangsgröße führt.

Die Überprüfung kann dabei erfolgen, indem vorher auf geeignete Weise ausgewählte Prozessgrößen in der Software als Diagnosedaten in Form einer Kopie im Speicher erfasst und dann an die Diagnoseeinheit 3 übertragen werden, oder aber indem vorher auf geeignete Weise ausgewählte Prozessgrößen direkt als Diagnosedaten an die Diagnoseeinheit 3 übertragen werden, ohne davor intern kopiert worden zu sein. Bei den Diagnosedaten handelt es sich insbesondere um in Rechenprozessen verwendete Variablen, also Eingangs-, Ausgangs-, und/oder Zwischenwerte der Rechenprozesse.

In beiden Fällen wird das Kopieren der Daten zur Übertragung als "Sampling" bezeichnet. Der Zeitpunkt, an dem das Kopieren ausgelöst wird, wird als "Trigger" bezeichnet.

Eine Auswahl der Prozessgrößen kann beispielsweise durch ein von der Diagnoseeinheit 3 bereitgestelltes Auswahlsignal erfolgen.

Bei einem Einzelkernrechnersystem erfolgt das Sampling am Ende bestimmter Rechenprozesse, die das dynamische Verhalten des Systems widerspiegeln. Beispielsweise erfolgt ein Trigger pro Kurbelwellenumdrehung. Beispielsweise besitzt ein Regler, also ein Rechenprozess, der eine regelnde Funktion ausübt, eine benötigte Reglerdynamik von 10ms. Ziel dabei ist es, dass in der Diagnoseeinheit 3 das Verhalten des Systems widergespiegelt wird, jedoch nicht Eigenschaften widergespiegelt werden, wie etwa die Berechnung der Prozesskette auf dem Mikrokontroller erfolgt. Dies lässt sich auf dem Einzelkernrechnersystem insofern bewerkstelligen, als dass eine Systemzykluszeitdauer durch eine oder mehrere Rechenprozesse abgebildet wird. Das Sampling erfolgt dann nach Beendigung der zu einer Systemzykluszeitdauer zugehörigen Rechenprozesse.

Die Steuervorrichtung 1 ist als Mehrkernprozessor ausgebildet, der mehrere Kerne C0, C1 umfasst (Figur 2). Bei den Kernen C0, C1 handelt es sich insbesondere um Rechenkerne der Steuervorrichtung 1. In diesem Ausführungsbeispiel umfasst die Steuervorrichtung 1 zwei Kerne C0, C1. In anderen Ausführungsbeispielen kann eine Anzahl der Kerne C0, C1 der Steuervorrichtung 1 hiervon abweichen, und diese insbesondere übersteigen.

Die Steuervorrichtung 1 ist ausgebildet, mehrere Rechenprozesse T1, T2 präemptiv und/oder gleichzeitig abzuarbeiten. Mit der Einführung von Mehrkernrechnersystemen trägt der zuvor dargestellte Ansatz nicht mehr. Beim Einsatz des Mehrkernrechnersystems wird die Berechnung der Prozesskette insbesondere derart aufgeteilt, dass eine optimale Rechenlastverteilung auf die einzelnen Kerne C0, C1 erfolgt. Dies bedeutet nun, dass Rechenprozesse T1, T2, die ein und derselben Systemzykluszeitdauer zuzuordnen sind, auf mehrere Kerne C0, C1 zur Berechnung verteilt werden. Wendet man das oben im Zusammenhang mit dem Einzelkernrechnersystem beschriebene Verfahren an, würde zur selben Systemzykluszeitdauer auf allen Kernen C0, C1 jeweils ein Sampling und ein Trigger erfolgen. Dies hat unter anderem folgende Nachteile zur Folge:
Zum einen wird einem Anwender der Diagnoseeinheit 3 anhand der sich ergebenden Diagnosekanäle, wie zum Beispiel einem 10ms Kanal für Kern C0 und einem 10ms Kanal für Kern C1, eine Architektur des Mehrkernrechnersystems widergespiegelt, wie zum Beispiel die Anzahl der Kerne C0, C1. Dies ist unter Umständen nicht gewollt, da die Diagnoseeinheit 3 auf einer Ebene des zu analysierenden Systems arbeiten soll. Die Diagnosekanäle ergeben sich insbesondere durch die Auswahl der Prozessgrößen bzw. der zu übertragenden Diagnosedaten.

Ferner ändert sich eine Verteilung der Berechnungsvorgänge auf die einzelnen Kerne C0, C1 innerhalb verschiedener Softwarestände der Steuervorrichtung 1. Auch dies würde dem Anwender der Diagnoseeinheit 3 widergespiegelt werden und macht möglicherweise eine Umkonfiguration der Diagnoseeinheit 3 notwendig. Beispielhaft sei hier die Auswahl des Diagnosekanals genannt.

Des Weiteren ändert sich die Abfolge der Berechnungsvorgänge einer Systemzykluszeitdauer verteilt auf mehrere Kerne C0, C1 abhängig von einem Betriebszustand des Systems. Beispielsweise rechnet der Kern C0 in einem ersten Systembetriebszustand A alle 10ms Rechenprozesse T1, T2 schneller als der Kern C1. Der Rechenprozess T2 kann in diesem Zusammenhang beispielsweise einen zeitlichen Versatz t_{off} zu dem Rechenprozess T1 aufweisen. In einem zweiten Systembetriebszustand B hingegen rechnet der Kern C1 alle 10ms Rechenprozesse T1, T2 schneller als der Kern C0. Dies führt unter Umständen dazu, dass die Diagnosedaten, deren Sampling auf den einzelnen Kernen C0, C1 durchgeführt wird, zeitlich nicht mehr kohärent sind.

Darüber hinaus führt die Auswahl einer Prozessgröße als Diagnosedatum zum Sampling auf mehreren Kernen C0, C1 in Bezug auf dieselbe Systemzykluszeitdauer zu einer unnötigen Erhöhung einer benötigten Kommunikationsbandbreite bei der Übertragung zur Diagnoseeinheit 3. Will der Anwender der Diagnoseeinheit 3 dies vermeiden, benötigt er darüber hinaus eine Information, auf welchem der Kerne C0, C1 die Prozessgröße berechnet wird. Diese Information steht allerdings üblicherweise nicht zur Verfügung und würde auch die Komplexität des Auswahlvorgangs der Prozessgröße als Diagnosedatum in der Diagnoseeinheit 3 für den Anwender in nicht akzeptabler Weise erhöhen.

Werden kohärente Datenobjekte, für die Konsistenz bei dem Sampling gefordert wird, auf einem der Kerne C0, C1 geschrieben, jedoch ganz oder teilweise von einem anderen der Kerne C0, C1 zur Übertragung kopiert, so kann weder deren Konsistenz bei dem Sampling sichergestellt werden, noch hat der Anwender die Möglichkeit, Konsistenzprobleme zu erkennen.

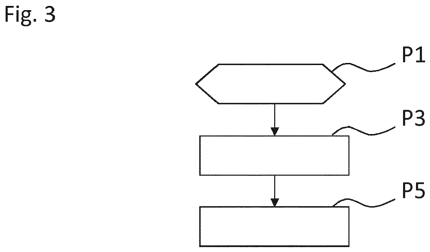

Die Software in der Steuervorrichtung 1, die für das Sampling zuständig ist, wird in diesem Zusammenhang derart erweitert, dass ein Auslösen des Samplings nicht statisch zu einem Zeitpunkt innerhalb der Prozesskette erfolgt, sondern der Trigger während eines Betriebs der Steuervorrichtung 1 dynamisch auf Basis eines hinterlegten Algorithmus berechnet wird (vergleiche Figur 3).

Figur 2 zeigt einen prinzipiellen Ablauf zweier sich über die Zeit t überschneidender Rechenprozesse T1, T2. Die Rechenprozesse T1, T2 können jeweils Eingangs-, Zwischen- und Ausgangswerte aufweisen, die auch als durch den jeweiligen Rechenprozess T1, T2 verwendete Variablen oder Prozessgrößen bezeichnet werden können. Wie in Figur 2 dargestellt wird nach Beenden des jeweiligen Rechenprozesses T1, T2 eine Datenfunktion D ausgeführt, bei der beispielsweise Ausgangswerte des jeweiligen Rechenprozesses T1, T2 in einen globalen Speicher der Steuervorrichtung 1 kopiert werden.

Der Algorithmus löst das Sampling S des Diagnosekanals 100ms aus, sobald alle 100ms Rechenprozesse T1, T2 auf allen Kernen C0, C1 für eine Systemzykluszeitdauer abgeschlossen sind. Hierbei zeigt sich in Figur 2, dass dies für den ersten Systembetriebszustand A auf dem Kern C1 geschieht, im zweiten Systembetriebszustand B auf dem Kern C0. Die Diagnoseeinheit 3 wiederum spiegelt die Systemsicht wider, also die 100ms Systemzykluszeitdauer.

Der verwendete Algorithmus beinhaltet eine Möglichkeit der Diagnose, mittels welcher bei dem Sampling Konsistenzprobleme von kohärenten Diagnosedaten detektiert werden können. Das Ergebnis dieser Diagnose kann dann dem Anwender wiederum als Information in der Diagnoseeinheit 3 zur Verfügung gestellt werden und zum Beispiel als Hilfsmittel bei der Plausibilisierung von Diagnosedaten Verwendung finden.

In vorteilhafter Weise wird der Trigger mittels eines Algorithmus ermittelt. Dabei definieren sich mögliche Zeitpunkte für das Sampling nicht unmittelbar aus dem Softwaresystem, wie zum Beispiel das Ende eines Rechenprozesses T1, T2, sondern in Bezug auf das zu steuernde Gesamtsystem. Somit werden die Diagnosedaten nicht mehr in Bezug auf die Berechnung auf einem Kern C0, C1, sondern in Bezug auf das Gesamtsystem ermittelt. Damit entfällt eine Betrachtung, auf welchem Kern C0, C1 ein Diagnosedatum erzeugt wird.

Die Steuervorrichtung 1 umfasst insbesondere einen Daten- und Programmspeicher, in dem Schritte des Verfahrens zur Ermittlung des korrekten Triggers als Programm gespeichert sind, wie im Folgenden anhand des Ablaufdiagramms der Figur 3 näher erläutert.

Das Programm wird in einem Schritt P1 gestartet. Beispielsweise wird in dem Schritt P1 den Rechenprozessen T1, T2 jeweils eine Maximallaufzeitdauer zugeordnet. Die Rechenprozesse T1, T2 werden abhängig von ihrer Maximallaufzeitdauer jeweils einer vorgegebenen Systemzykluszeitdauer zugeordnet. Das Programm wird anschließend in einem Schritt P3 fortgesetzt.

In dem Schritt P3 wird geprüft, ob alle Rechenprozesse T1, T2, die derselben vorgegebenen Systemzykluszeitdauer zugeordnet sind, abgeschlossen sind. Das Programm wird anschließend in einem Schritt P5 fortgesetzt.

In dem Schritt P5 wird ein Ausgangssignal über die Kommunikationsschnittstelle K der Steuervorrichtung 1 bereitgestellt. Beispielsweise wird in diesem Zusammenhang ein Auswahlsignal über die Diagnoseeinheit 3 bereitgestellt abhängig dessen eine Auswahl erfolgt, welche Prozessgrößen, also welche Eingangs-, Ausgangs-, oder Zwischenwerte der Rechenprozesse T1, T2 dem Ausgangssignal als Diagnosedaten zugeordnet werden. Das Programm wird beispielsweise anschließend beendet.

Der beschriebene Algorithmus bzw. das Programm umfasst also insbesondere ein Starten des Samplings, nachdem alle Berechnungen einer Systemzykluszeit auf allen beteiligten Kernen C0, C1 abgeschlossen ist. Durch diesen Algorithmus können die oben genannten Nachteile vermieden werden.

Alternativ oder zusätzlich kann zur Ermittlung des korrekten Triggers ein Starten des Samplings auf einem dafür vorgesehenen Diagnosekanal nur im Falle spezieller Ereignisse innerhalb des Systems bzw. Verknüpfen mit zusätzlichen Bedingungen durchgeführt werden. Beispielhaft wird in dem Schritt P5 hierzu alternativ oder zusätzlich ein Startsignal ermittelt, beispielhaft sobald alle Rechenprozesse T1, T2, die derselben vorgegebenen Systemzykluszeitdauer zugeordnet sind, abgeschlossen sind. Beispielsweise wird in diesem Zusammenhang überprüft, ob das Startsignal vorliegt. Das Startsignal wird insbesondere abhängig von einem Sensorsignal und/oder einem Systemereignis und/oder einem Systembetriebszustand ermittelt.

Alternativ oder zusätzlich kann zur Ermittlung des korrekten Triggers ein weiteres Startsignal als Stellvertreter eines Startsignals definiert werden. Wird ein Startsignal beispielsweise durch ein vom Systembetriebszustand abhängigen Systemereignis ausgelöst, so bleibt das Sampling aus, wenn das auslösende Systemereignis ausbleibt. Beispielhaft kann dies der Fall sein, wenn eine Motordrehzahl null beträgt und folglich kein Kurbelwellensignal bereitgestellt wird. Folglich bleibt ein Startsignal aus, welches durch das Kurbelwellensignal ausgelöst werden würde. Wünscht der Anwender der Diagnoseeinheit 3 allerdings weiterhin das Sampling der diesem Diagnosekanal zugeordneten Prozessgrößen, so muss das Sampling ersatzweise durch ein weiteres Startsignal als Stellvertretersignal ausgelöst werden. Der Algorithmus zur Ermittlung des weiteren Startsignals als Stellvertretersignal ermittelt hierbei, ob das ursprünglich zu verwendende Startsignal verfügbar ist oder nicht.

Der Aufruf zu dem Sampling erfolgt an den entsprechenden Stellen innerhalb der Prozesskette. Die Entscheidung, ob tatsächlich zu diesem Zeitpunkt das Sampling erfolgt und die Diagnosedaten an die Diagnoseeinheit 3 übertragen werden erfolgt durch den dem Startsignal zugeordneten Algorithmus.

## Patentansprüche

1. Verfahren zum Betreiben einer Steuervorrichtung (1) für ein Fahrzeug, wobei
- die Steuervorrichtung (1) als Mehrkernprozessor mit wenigstens zwei Kernen (C0, C1) zur parallelen Abarbeitung von Rechenprozessen (T1, T2) ausgebildet ist und eine Kommunikationsschnittstelle (K) umfasst, über welche sie signaltechnisch koppelbar mit einer Diagnoseeinheit (3) ist, bei dem
- die Rechenprozesse (T1, T2) jeweils einer vorgegebenen Systemzykluszeitdauer der Steuervorrichtung (1) zugeordnet werden,
- wenn alle Rechenprozesse (T1, T2), die derselben vorgegebenen Systemzykluszeitdauer zugeordnet sind, abgeschlossen sind, dann wird ein Ausgangssignal über die Kommunikationsschnittstelle (K) der Steuervorrichtung (1) bereitgestellt, umfassend zumindest eines von Eingangs-, Ausgangs-, oder Zwischenwerten der Rechenprozesse (T1, T2), **dadurch gekennzeichnet, dass**
- ein Auswahlsignal bereitgestellt wird, das repräsentativ ist für die dem Ausgangssignal zuzuordnenden Eingangs- und/oder Ausgangs und/oder Zwischenwerte, und
- der jeweilige Eingangs- und/oder Ausgangs- und/oder Zwischenwert der Rechenprozesse (T1, T2) abhängig von dem Auswahlsignal dem Ausgangssignal zugeordnet wird.

2. Verfahren nach Anspruch 1, bei dem
- den Rechenprozessen (T1, T2) jeweils eine Maximallaufzeitdauer zugeordnet wird, und
- die Rechenprozesse (T1, T2) jeweils abhängig von ihrer Maximallaufzeitdauer der jeweiligen vorgegebenen Systemzykluszeitdauer der Steuervorrichtung (1) zugeordnet werden.

3. Verfahren nach einem der vorstehenden Ansprüche, bei dem
- wenn alle Rechenprozesse (T1, T2), die derselben vorgegebenen Systemzykluszeitdauer zugeordnet sind, abgeschlossen sind, ein Startsignal (S) ermittelt wird, und
- abhängig von dem Startsignal die Zuordnung des jeweiligen Eingangs- und/oder Ausgangs- und/oder Zwischenwerts der Rechenprozesse (T1, T2) durchgeführt wird.

4. Verfahren nach einem der vorstehenden Ansprüche, bei dem ein Startsignal abhängig von einem Sensorsignal und/oder einem Systemereignis ermittelt wird.

5. Verfahren nach einem der vorstehenden Ansprüche 3 oder 4, bei dem das Startsignal abhängig von einem Systembetriebszustand ermittelt wird.

6. Verfahren nach einem der vorstehenden Ansprüche 3 bis 5, bei dem
- abhängig von einem Sensorsignal und/oder einem Systemereignis und/oder einem Systembetriebszustand ein Stellvertretersignal ermittelt wird, und
- das Startsignal abhängig von dem Stellvertretersignal ermittelt wird.

7. Diagnosesystem (10), umfassend
- eine Steuervorrichtung (1), welche als Mehrkernprozessor mit wenigstens zwei Kernen (C0, C1) zur parallelen Abarbeitung von Rechenprozessen (T1, T2) ausgebildet ist und eine Kommunikationsschnittstelle (K) aufweist, und
- eine Diagnoseeinheit (3), die mit der Kommunikationsschnittstelle (K) signaltechnisch gekoppelt und ausgebildet ist,
-- der Steuervorrichtung (1) ein Auswahlsignal bereitzustellen, das repräsentativ ist für einem Ausgangssignal zuzuordnende Eingangs- und/oder Ausgangs- und/oder Zwischenwerte von durch die Steuervorrichtung abzuarbeitenden Rechenprozessen, und
-- ein jeweiliges durch die Steuervorrichtung (1) bereitgestelltes Ausgabesignal auszugeben, und
**dadurch gekennzeichnet, dass** die Steuervorrichtung ausgebildet ist, ein Verfahren nach einem der vorstehenden Ansprüche 1 bis 6 durchzuführen.

## Claims

1. Method for operating a control device (1) for a vehicle, wherein
- the control device (1) is in the form of a multi-core processor having at least two cores (C0, C1) for executing computing processes (T1, T2) in a parallel manner and comprises a communication interface (K), via which the control device can be coupled to a diagnostic unit (3) using signalling, in which
- the computing processes (T1, T2) are each assigned to a predefined system cycle duration of the control device (1),
- if all computing processes (T1, T2) which are assigned to the same predefined system cycle duration have been concluded, an output signal is provided via the communication interface (K) of the control device (1), said output signal comprising at least one of input, output or intermediate values of the computing processes (T1, T2), **characterized in that**
- a selection signal which is representative of the input and/or output and/or intermediate values to be assigned to the output signal is provided, and
- the respective input and/or output and/or intermediate value of the computing processes (T1, T2) is assigned to the output signal on the basis of the selection signal.

2. Method according to Claim 1, in which
- a maximum delay duration is respectively assigned to the computing processes (T1, T2), and
- the computing processes (T1, T2) are each assigned to the respective predefined system cycle duration of the control device (1) on the basis of their maximum delay duration.

3. Method according to one of the preceding claims, in which
- if all computing processes (T1, T2) which are assigned to the same predefined system cycle duration have been concluded, a start signal (S) is determined, and
- the assignment of the respective input and/or output and/or intermediate value of the computing processes (T1, T2) is carried out on the basis of the start signal.

4. Method according to one of the preceding claims, in which a start signal is determined on the basis of a sensor signal and/or a system event.

5. Method according to either of the preceding Claims 3 and 4, in which the start signal is determined on the basis of a system operating state.

6. Method according to one of the preceding Claims 3 to 5, in which
- a representative signal is determined on the basis of a sensor signal and/or a system event and/or a system operating state, and
- the start signal is determined on the basis of the representative signal.

7. Diagnostic system (10) comprising
- a control device (1) which is in the form of a multi-core processor having at least two cores (C0, C1) for executing computing processes (T1, T2) in a parallel manner and has a communication interface (K), and
- a diagnostic unit (3) which is coupled to the communication interface (K) using signalling and is designed
-- to provide the control device (1) with a selection signal which is representative of input and/or output and/or intermediate values of computing processes to be executed by the control device, which values are to be assigned to an output signal, and
-- to output a respective output signal provided by the control device (1), and
**characterized in that** the control device is designed to carry out a method according to one of the preceding Claims 1 to 6.

## Revendications

1. Procédé de fonctionnement d'un dispositif de commande (1) destiné à un véhicule,
- le dispositif de commande (1) étant conçu comme un processeur multi-coeur qui comporte au moins deux coeurs (C0, C1), destinés à traiter en parallèle des processus de calcul (T1, T2), et une interface de communication (K) qui peut être couplée par une technique de signal à une unité de diagnostic (3),
- les processus de calcul (T1, T2) étant chacun associés à une durée de cycle de système prédéfinie du dispositif de commande (1),
- lorsque tous les processus de calcul (T1, T2) qui sont associés à la même durée de cycle de système prédéfinie sont terminés, un signal de sortie étant délivré par le biais de l'interface de communication (K) au dispositif de commande (1), lequel signal de sortie comprend l'une au moins des valeurs d'entrée, valeurs d'entrée de sortie ou valeurs d'entrée intermédiaires des processus de calculs (T1, T2), **caractérisé en ce que**
- un signal de sélection est produit qui est représentatif des valeurs d'entrée et/ou valeurs d'entrée sortie et/ou valeurs d'entrée intermédiaires à associer au signal de sortie, et
- la valeur d'entrée et/ou valeur de sortie et/ou valeur intermédiaire des processus de calcul (T1, T2) sont associées au signal de sortie en fonction du signal de sélection.

2. Procédé selon la revendication 1,
- les processus de calcul (T1, T2) étant chacun associés à une durée maximale, et
- les processus de calcul (T1, T2) étant chacun associés à la durée de cycle de système prédéfinie respective du dispositif de commande (1) en fonction de leur durée de transit maximale.

3. Procédé selon l'une des revendications précédentes,
- lorsque tous les processus de calcul (T1, T2) associés à la même durée de cycle de système prédéfinie sont terminés, un signal de départ (S) étant déterminé, et
- l'association de la valeur d'entrée et/ou valeur de sortie et/ou valeur intermédiaires respective des processus de calcul (T1, T2) étant effectuée en fonction du signal de départ.

4. Procédé selon l'une quelconque des revendications précédentes, un signal de départ étant déterminé en fonction d'un signal de capteur et/ou d'un événement de système.

5. Procédé selon l'une des revendications précédentes 3 ou 4, le signal de départ étant déterminé en fonction d'un état de fonctionnement du système.

6. Procédé selon l'une des revendications précédentes 3 à 5,
- un signal de réglage représentatif étant déterminé en fonction d'un signal de capteur et/ou d'un événement de système et/ou d'un état de fonctionnement du système, et
- le signal de départ étant déterminé en fonction du signal représentatif.

7. Système de diagnostic (10), comprenant
- un dispositif de commande (1) qui est conçu comme un processeur multi-coeur qui comporte au moins deux coeurs (C0, C1), destinés à traiter en parallèle des processus de calcul (T1, T2), et une interface de communication (K), et
- une unité de diagnostic (3) qui est couplée par une technique de signal à l'interface de communication (K) et qui est conçue pour
- délivrer au dispositif de commande (1) un signal de sélection qui est représentatif des valeurs d'entrée et/ou valeurs de sortie et/ou valeurs intermédiaires des processus de calcul que doit traiter le dispositif de commande, et
- délivrer un signal de sortie respectif produit par le dispositif de commande (1), et
**caractérisé en ce que** le dispositif de commande est conçu pour mettre en oeuvre un procédé selon l'une des revendications précédentes 1 à 6.
